# EUROPÄISCHE PATENTSCHRIFT

(11) **EP 1 606 545 B1**
(45) Veröffentlichungstag und Bekanntmachung des Hinweises auf die Patenterteilung: **23.08.2006**
(21) Anmeldenummer: 04721837.5
(22) Anmeldetag: 19.03.2004
(51) Int. Cl.: F16L 37/60

(54) **GASSTECKDOSE**
GAS-SOCKET OUTLET
PRISE DESTINEE AU GAZ

(30) Priorität: 24.03.2003 DE 10312997
(43) Veröffentlichungstag der Anmeldung: 21.12.2005
(73) Patentinhaber: Mertik Maxitrol GmbH & Co. KG, 06502 Thale (DE)
(72) Erfinder: ALBRECHT, Günter, 06502 Weddersleben (DE); VOGT, Thomas, 06507 Bad Suderode (DE)
(74) Vertreter: Albrecht, Günter
(86) Internationale Anmeldenummer: PCT/EP2004/002886
(87) Internationale Veröffentlichungsnummer: WO 2004/085906

(56) Entgegenhaltungen:
- DE-C- 10 061 653
- DE-C- 10 151 995
- DE-C- 19 847 979

## Beschreibung

### Technisches Gebiet

Die Erfindung betrifft eine Gassteckdose mit einem Gehäuse, das einen Eingangsstutzen für die Herstellung einer festen Verbindung der Gassteckdose mit einer ortsfest an einer Wand installierten Gasleitung, und eine Absperreinrichtung für den Anschluss eines Gasanschlusssteckers aufweist. Dabei gibt die Absperreinrichtung beim Anschluss des Gasanschlusssteckers erst nach hergestellter äußerer Dichtheit den inneren Gasweg frei.

### Stand der Technik

Gassteckdosen dienen zur Herstellung einer Verbindung zwischen einer ortsfest installierten Gasleitung in Gebäuden und einem gasbetriebenen Gerät, wie beispielsweise ein Haushaltherd oder ein Wäschetrockner. Mit ihrer Hilfe ist eine einfache Verbindung der Gasverbraucher mit der Gasleitung möglich.

Eine gattungsbildende Gassteckdose ist in der DE 100 61 653 C1 beschrieben. Diese Gassteckdose besteht aus einem Grundkörper mit integriertem Eingangsstutzen zur Herstellung einer festen Verbindung mit der ortsfest installierten Gasleitung, einem in den Grundkörper eingeschraubten Ausgangsstutzen und einer Grundplatte, die die äußere Mantelfläche des Ausgangsstutzens in einem definierten zur Aufnahme des Gasanschlusssteckers dienenden Abstand umschließt und ansonsten mit dem Grundkörper verschraubt ist. Desweiteren dient die Grundplatte als Anschlag an einer Wand, an der sie ebenfalls befestigt ist. Auf der Grundplatte ist eine Haube befestigt, die bei abgetrenntem Gasanschlussstecker mittels einer Abdeckung die Anschlussöffnung des Ausgangsstutzens verschließt, wobei die Abdeckung eine Verriegelung besitzt. Diese Verriegelung ist durch eine erste Einführbewegung des Gasanschlusssteckers, auf den die Verriegelung der Abdeckung abgestimmt ist, in eine Einführöffnung entriegelbar. Durch zumindest eine weitere Bewegung des Gasanschlusssteckers gibt die Abdeckung die Anschlussöffnung des Ausgangsstutzens zum Anschluss des Gasanschlusssteckers frei.

Bei einer weiteren in der DE 101 51 995 C1 beschriebenen Lösung handelt es sich um eine Gassteckdose, die eine Lageanpassung der Gassteckdose bezogen auf die äußere Oberfläche der Wand und damit einen Ausgleich von Lageabweichungen zur ortsfest installierten Gasleitung gewährleistet. Dazu weist die Gassteckdose ein Gehäuse, eine Absperreinrichtung und ein Befestigungselement auf. Dabei besitzt das Gehäuse einen Eingangsstutzen für die Herstellung einer festen Verbindung der Gassteckdose mit einer ortsfest installierten Gasleitung. Die Absperreinrichtung dient zum Anschluss eines Gasanschlusssteckers, wobei sie erst nach hergestellter äußerer Dichtheit den inneren Gasweg freigibt. Mit einer rohrförmigen Tülle, die an ihrem dem Gehäuse zugewandten Ende einen Bund aufweist, der auf der dem Gehäuse abgewandten Seite durch eine Rastnut begrenzt wird, ragt die Absperreinrichtung gasdicht in das Gehäuse. Ein federnder Haltering ermöglicht das Hineingleiten der Tülle in das Gehäuse, wohingegen ein Herausgleiten der Tülle aus dem Gehäuse verhindert ist. Das Befestigungselement ist einerseits mit der Wand und andererseits mit der Absperreinrichtung verbunden, wobei die Absperreinrichtung gegenüber dem Gehäuse nach dem einseitigen Lösen des Befestigungselementes um die Längsachse der Tülle schwenkbar ist.

Bei diesen beiden Lösungen ist es von Nachteil, dass sie nur als sogenannte Unterputzausführungen eingesetzt werden können. Insbesondere bei nachträglichen Überlegungen bezüglich des Einsatzes eines Gasgerätes ist jedoch eine notwendige Verlegung der Gasleitung innerhalb der Wand, wenn überhaupt, nur mit sehr hohen Aufwand und Kosten möglich. In solchen Fällen wird deshalb üblicherweise die Gasleitung auf der Wand verlegt und erfordert somit eine Gassteckdose als Aufputzausführung.

Eine weitere Ausführung einer Gassteckdose ist in der DE 35 19 933 A1 beschrieben. Hier besitzt die Gassteckdose einen im Gehäuse verdrehbaren rohrförmigen Gasdurchlasskörper für die Aufnahme eines Gasanschlusssteckers und einen rechtwinklig zum Gasdurchlasskörper gerichteten Eintrittskanal. Das Absperrorgan besteht aus einer um die Längsachse des Gasdurchlasskörpers verdrehbaren Kugel mit einem rechtwinkligen Kugelkanal. Das Eintrittsende des Gasdurchlasskörpers ragt in das Austrittsende des Kugelkanals hinein und ist mit der Kugel drehfest gekuppelt. Die Kugel liegt mit ihren in Längsrichtung des Eintrittskanals diametral gegenüber liegenden Seiten an zwei elastischen Dichtungsringen des Gehäuses an, von denen ein Dichtungsring an einem in den Eintrittskanal eingesetzten Rohrstutzen angeordnet ist, mit dem der Dichtungsring gegen die Kugel andrückbar ist.

Bei dieser Lösung handelt es sich zwar um eine Aufputzausführung. Es ist jedoch von Nachteil, dass mit der erfolgten Installation auch der sichtbare Bereich der Gassteckdose mit installiert ist. Das birgt die Gefahr in sich, dass es bei den noch notwendigen Arbeiten bis zur endgültigen Fertigstellung eines Raumes zu Beschädigungen, wie zum Beispiel Kratzern, kommen kann, die das dekorative Aussehen der Gassteckdose negativ beeinflussen. Ein weiterer Nachteil ist die fehlende Möglichkeit bei späteren Renovierungs- oder Sanierungsarbeiten eine erneute Anpassung oder auch ein Auswechseln des sichtbaren Teiles der Gassteckdose vorzunehmen.

### Darstellung der Erfindung

Der Erfindung liegt das Problem zugrunde, eine Gassteckdose der genannten Art zu entwickeln, die als Aufputzausführung eingesetzt werden kann. Dabei soll die endgültige Installierung des äußeren sichtbaren Bereiches der Gassteckdose erst nach der endgültigen handwerksseitigen Fertigstellung des Montageortes beispielsweise eines Raumes möglich sein. Desweiteren soll auch ein Auswechseln des äußeren sichtbaren Bereiches der Gassteckdose ohne größeren Aufwand ermöglicht werden.

Erfindungsgemäß wird das Problem dadurch gelöst, dass die Gassteckdose ein Gehäuse, eine Absperreinrichtung, ein Halteelement und eine stirnseitig offene Abdeckung aufweist. Dabei besitzt das Gehäuse einen Eingangsstutzen für die Herstellung einer festen Verbindung der Gassteckdose mit einer ortsfest an einer Wand installierten Gasleitung. Die Absperreinrichtung dient zum Anschluss eines Gasanschlusssteckers, wobei sie erst nach hergestellter äußerer Dichtheit den inneren Gasweg freigibt. Mit einer längsverschiebbaren rohrförmigen Tülle ragt die Absperreinrichtung gasdicht in das Gehäuse. Das Gehäuse ist verdrehsicher in dem Halteelement befestigt, das ortsfest mit der Wand verbunden ist. An dem Halteelement ist des Weiteren die Absperreinrichtung befestigbar. Die stirnseitig offene Abdeckung weist in einer Seitenwand eine Öffnung für den Eingangsstutzen auf und umschließt ansonsten das Halteelement und das Gehäuse frei beweglich, wohingegen sie sich bei befestigter Absperreinrichtung einerseits an der Wand und andererseits an der Absperreinrichtung abstützt.

Damit wurde eine Lösung gefunden, mit der die weiter oben genannten Nachteile des Standes der Technik beseitigt wurden. Die Gassteckdose kann an nachträglich auf der Wand installierte Gasleitungen angeschlossen werden, wobei der äußere sichtbare Teil der Gassteckdose erst nach der Fertigstellung des Montageortes installiert werden braucht. Somit kann die Leitungsinstallation in der fachüblichen Art und Weise ohne zusätzlichen Aufwand erfolgen. Auch ein Wechsel des sichtbaren Teiles der Gassteckdose ist somit ermöglicht.

Um bei der Installation der äußeren sichtbaren Teile der Gassteckdose die Lagezuordnung zwischen der Absperreinrichtung und der Hülle zu erleichtern, erweist es sich als vorteilhaft, wenn die der Absperreinrichtung zugewandte Stirnseite der Abdeckung einen zumindest teilweise umlaufenden Steg aufweist, der bei befestigter Absperreinrichtung in dieselbe hineinragt.

### Ausführungsbeispiel

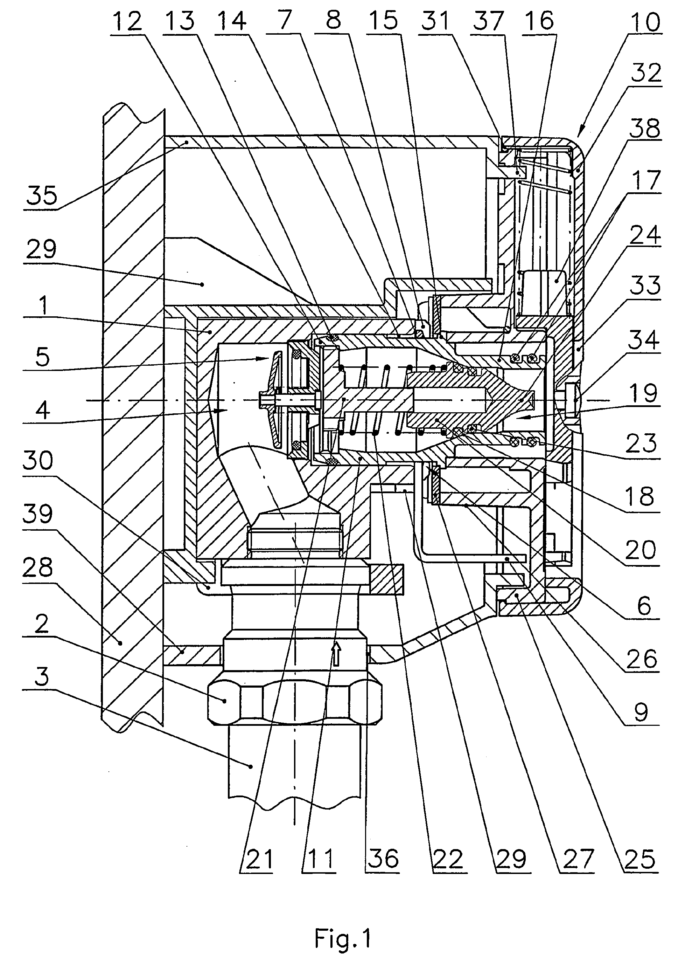

Die erfindungsgemäße Gassteckdose wird nachstehend an einem Ausführungsbeispiel beschrieben. Die einzige Figur zeigt eine an einer Wand montierte Gassteckdose in geschnittener Darstellung in Geschlossenstellung.

Die erfindungsgemäße Gassteckdose weist ein Gehäuse 1 auf, das einen in diesem Ausführungsbeispiel rechtwinklig zur Längsachse des Gehäuses 1 angeordneten, integrierten Eingangsstutzen 2 besitzt, der in diesem Fall mit einem Innengewinde zur Herstellung einer festen Verbindung der Gassteckdose mit einer ortsfest installierten Gasleitung 3 versehen ist. Es versteht sich, dass die Verbindung beispielsweise auch als Pressverbindung o.ä. ausgebildet sein kann. Der durch den Eingangsstutzen 2 gebildete Gaseingang führt in einen Raum 4, in dem im Anschluss an den Gaseingang ein Gasströmungswächter 5 eingepresst ist.

In unmittelbarer Nähe einer stirnseitigen Öffnung 6 des Gehäuses 1 weist der Raum 4 eine Nut 7 auf, die im Bereich einer Aussparung 8 unterbrochen ist. In der Nut 7 befindet sich ein federnder kreisförmiger Haltering 9.

In den Raum 4 des Gehäuses 1 ragt durch die Öffnung 6 eine zur Absperreinrichtung 10 zugehörige Tülle 11, die an ihrem im Gehäuse 1 befindlichen Ende einen Bund 12 mit einer umlaufenden Nut aufweist, in der sich ein O-Ring 13 befindet, über den die notwendige äußere Gasdichtheit gewährleistet ist. Auf seiner dem Gehäuse 1 abgewandten Seite wird der Bund 12 durch eine Rastnut 14 begrenzt, die durch einen als Anschlag 15 dienenden Bund von einem sich anschließenden, den Gasausgang aufweisenden Ausgangsstutzen 16 getrennt ist, der zur Aufnahme eines Gasanschlusssteckers bestimmt ist. Zwei auf dem äußeren Umfang des Ausgangsstutzens 16 befindliche O-Ringe 17 dienen zur Herstellung der äußeren Gasdichtheit.

Die Tülle 11 bildet mit ihrer Innenkontur einen Ventilsitz 18 für ein Absperrventil 19, dessen Schließkörper 20 längsbeweglich zur Achse der Tülle 11 und damit auch zum Ventilsitz 18 auf einem Führungsstück 21 gelagert ist. Dabei wird der Schließkörper 20 unter der Kraft einer Schließfeder 22, die sich mit einem Ende auf dem Führungsstück 21 und mit dem anderen Ende am Schließkörper 20 abstützt, in Schließrichtung belastet. Zur Gewährleistung der Gasdichtheit dienen auf dem Schließkörper befindliche O-Ringe 23, die in Schließstellung am Ventilsitz 18 anliegen. Mit einer axialen Verlängerung 24 ragt der Schließkörper 20 in den Ausgangsstutzen 16 hinein.

Eine noch zur Absperreinrichtung 10 gehörende Grundplatte 25 weist einen rohrförmigen Dom 26 auf, der die äußere Mantelfläche des Ausgangsstutzens 16 in einem durch den Gasanschlussstecker geforderten Abstand umfasst. An der Stirnseite des Domes 26 stützt sich der als Bund ausgeführte Anschlag 15 der Tülle 11 ab, der über ein Halteblech 27, das mit dem Dom 26 verschraubt ist, gegen diesen gepresst wird.

Ein topfförmig gestaltetes Halteelement 29 ist mit seiner Rückseite in an sich bekannter Weise, beispielsweise mittels nicht dargestellter Schrauben und Dübel, an einer Wand 28 befestigt. Der Innenraum des Halteelementes 29 ist so gestaltet, dass er das Gehäuse 1 und in diesem Ausführungsbeispiel zur Erhöhung der Steifigkeit auch den Dom 26 verdrehsicher aufnehmen kann. Insbesondere aus fertigungstechnischer Sicht bietet sich deshalb für das Gehäuse 1 und für den Dom 26 und somit auch für die Innenraumkontur des Halteelementes 29 ein Rechteckquerschnitt an. Weiterhin ist das Halteelement 29 einseitig geöffnet, um die Einführung des Eingangsstutzens 2 zu ermöglichen. Um das Gehäuse 1 in dieser verdrehsicheren Lage im Halteelement 29 zu befestigen, ist auf dem an der Wand 28 anliegenden Bereich des Halteelementes 29 eine über den Eingangsstutzen 2 fassende Schelle 30 befestigt.

Über Rastelemente 31 ist die Grundplatte 25 mit einer sie überdeckenden Haube 32 verbunden. Die Haube 32 besitzt auf ihrer Vorderseite zwei Bohrungen zur Aufnahme von Befestigungsschrauben 34, die mittels im Halteelement 29 befindlicher Gewindelöcher mit diesem verschraubt sind, sowie ein Langloch 33, wobei sich hinter einem Teil des Langloches 33 der Gasausgang des Ausgangsstutzens 16 befindet. Das Langloch 33 ist in der dargestellten geschlossenen Stellung durch einen Schieber 38 verschlossen.

Zwischen der Haube 32 und der Grundplatte 25 befinden sich noch weitere Funktionselemente. Die Funktion ist für den Fachmann bekannt und für die Erfindung unwesentlich. Auf eine weitere Erläuterung wird deshalb hier verzichtet.

Desweiteren ist zwischen der Wand 28 und der Absperreinrichtung 10 eine stirnseitig beidseitig offene Abdeckung 35 angeordnet, die im Bereich des Eingangsstutzens 2 eine zusätzliche seitliche Öffnung 36 für den Durchtritt desselben aufweist. Während die Abdeckung 35 bei fehlender Absperreinrichtung 10, wie es nach erfolgter Installation der Gasleitung 3 mit dem Gehäuse 1 und befestigtem Halteelement 29 der Fall ist, frei beweglich und entfernbar ist, wird sie bei Befestigung der Absperreinrichtung 10 am Halteelement 29, d.h. bei der Komplettierung der Gassteckdose, zwischen der Wand 28 und der Absperreinrichtung 10 festgespannt. Um bei diesem Vorgang, insbesondere bei einer eckigen Formgebung, die Lagezuordnung zwischen Abdeckung 35 und Haube 32 ohne Aufwand zu bestimmen, weist die Abdeckung 35 auf ihrer der Absperreinrichtung 10 zugewandten Stirnseite einen teilweise umlaufenden Steg 37 auf, der beim Befestigungsvorgang eine Führungsfunktion übernimmt und bei befestigter Absperreinrichtung 10 in dieselbe hineinragt.

Aus insbesondere optischen Gründen ist der bei der Komplettierung der Gassteckdose in der Abdeckung 35 entstehende Restspalt der Öffnung 36 durch einen zusätzlichen einschiebbaren Verschluss 39 verschließbar.

### Aufstellung der Bezugszeichen

- 1: Gehäuse
- 2: Eingangsstutzen
- 3: Gasleitung
- 4: Raum
- 5: Gasströmungswächter
- 6: Öffnung
- 7: Nut
- 8: Aussparung
- 9: Haltering
- 10: Absperreinrichtung
- 11: Tülle
- 12: Bund
- 13: O - Ring
- 14: Rastnut
- 15: Anschlag
- 16: Ausgangsstutzen
- 17: O-Ring
- 18: Ventilsitz
- 19: Absperrventil
- 20: Schließkörper
- 21: Führungsstück
- 22: Schließfeder
- 23: O-Ring
- 24: Verlängerung
- 25: Grundplatte
- 26: Dom
- 27: Halteblech
- 28: Wand
- 29: Halteelement
- 30: Schelle
- 31: Rastelement
- 32: Haube
- 33: Langloch
- 34: Befestigungsschraube
- 35: Abdeckung
- 36: Öffnung
- 37: Steg
- 38: Schieber
- 39: Verschluss

## Patentansprüche

1. Gassteckdose mit einem Gehäuse (1), das einen Eingangsstutzen (2) für die Herstellung einer festen Verbindung der Gassteckdose mit einer ortsfest an einer Wand (28) installierten Gasleitung aufweist, mit einer Absperreinrichtung (10) für den Anschluss eines Gasanschlusssteckers, die beim Anschluss des Gasanschlusssteckers erst nach hergestellter äußerer Dichtheit den inneren Gasweg freigibt, wobei die Absperreinrichtung (10) mit einer längsverschiebbaren rohrförmigen Tülle (11) gasdicht in das Gehäuse (1) hineinragt, mit einem ortsfest mit der Wand (28) verbundenen Halteelement (29), in dem einerseits das Gehäuse (1) verdrehsicher befestigt und an dem andererseits die Absperreinrichtung (10) befestigbar ist, **gekennzeichnet durch** eine stirnseitig offene Abdeckung (35), die in einer Seitenwand eine Öffnung (36) für den Eingangsstutzen (2) aufweist und ansonsten das Halteelement (29) und das Gehäuse (1) frei beweglich umschließt, wohingegen sie sich bei befestigter Absperreinrichtung (10) einerseits an der Wand (28) und andererseits an der Absperreinrichtung (10) abstützt.

2. Gassteckdose nach Patentanspruch 1, bei der die der Absperreinrichtung (10) zugewandte Stirnseite der Abdeckung (35) einen zumindest teilweise umlaufenden Steg (37) aufweist, der bei befestigter Absperreinrichtung (10) in dieselbe hineinragt.

## Claims

1. A gas socket with a housing (1) comprising an inlet port (2) for the establishment of a fixed connection of the gas socket with a gas piping installed on a wall (28) in a stationary way, with a shutoff device (10) for the connection of a gas connecting plug which, when the gas connecting plug is connected, does not release the internal gas path until external tightness is established, where the shutoff device (10) protrudes in a gas-tight way into the housing (1) with a tube-shaped nozzle (11) that can be shifted in a longitudinal way, and with a retaining element (29) connected with the wall (28) in a stationary way, where, on the one hand, the housing (1) is fastened in a torsion-proof way and, on the other, the shutoff device (10) can be mounted, **characterized in that** a cover (35) that is open on its face-side which, in one of its side walls, has an opening (36) for the inlet port (2) and otherwise surrounds the retaining element (29) and the housing (1) in a freely movable way, while it is supported on the wall (28) on the one hand and on the shutoff device (10) on the other when the shutoff device is fastened.

2. A gas socket in accordance with Claim 1, where the face of cover (35) pointing in the direction of the shutoff device (10) is provided with an at least partially circumferential web (37) which, when the shutoff device (10) is fastened, protrudes into the latter.

## Revendications

1. Prise de gaz avec un boîtier (1) qui présente une douille d'entrée (2) pour la réalisation d'un raccordement fixe de la prise de gaz avec une conduite de gaz stationnaire installée sur une paroi (28), avec un dispositif de blocage (10) pour le branchement d'une prise de gaz mâle, qui ne libère l'arrivée de gaz qu'après réalisation d'un raccordement extérieur étanche, le dispositif de blocage (10) dépassant de manière étanche au gaz dans le boîtier (1) avec une douille (11) tubulaire longitudinalement coulissante, avec un élément de retenue (29) relié fixement à la paroi (28), dans lequel d'une part le boîtier (1) est consolidé de manière à résister à la torsion et sur lequel d'autre part le dispositif de blocage (10) peut être fixé, **caractérisée par** un couvercle (35) ouvert sur le côté frontal, présentant sur une paroi latérale une ouverture (36) pour la douille d'entrée (2) et renfermant l'élément de retenue (29) et le boîtier (1) normalement librement déplaçables, mais par contre si le dispositif de blocage (10) est fixé, il s'appuie d'une part sur la paroi (28) et d'autre part sur le dispositif de blocage (10).

2. Prise de gaz selon la revendication du brevet 1, sur laquelle le côté frontal du couvercle (35) orienté vers le dispositif de blocage (10) présente un collet (37) au moins en partie circulaire, dépassant dans le dispositif de blocage (10) quand celui-ci est fixé.
